# EUROPÄISCHE PATENTANMELDUNG

(11) **EP 3 449 734 A1**
(43) Veröffentlichungstag der Anmeldung: **06.03.2019**
(21) Anmeldenummer: 18191239.5
(22) Anmeldetag: 28.08.2018
(51) Int. Cl.: A23L 2/40, A23L 2/52, A23L 2/54, C02F 1/68, B65D 23/02, B65D 51/28

(54) **VERFAHREN UND FLÜSSIGKEITSBEHÄLTER ZUR HERSTELLUNG VON SODAWASSER**

(30) Priorität: 31.08.2017 AT 507342017
(71) Anmelder: Biofermenta GmbH, 5303 Thalgau (AT)
(72) Erfinder: WESNER, Wolfgang, 1220 Wien (AT); Kurzmann, Heimo, 5302 Henndorf (AT)
(74) Vertreter: Vinazzer, Edith

(57) **Zusammenfassung**

Die Erfindung betrifft ein Verfahren zur Herstellung von Sodawasser mit folgenden Schritten:
a) Einbringen von Partikeln aus Dolomit in einen Flüssigkeitsbehälter,
b) Einfüllen von Trinkwasser in den Flüssigkeitsbehälter,
c) Einpressen von Kohlenstoffdioxid in das Trinkwasser, wobei sich das Kohlenstoffdioxid über eine Gleichgewichtsreaktion im Trinkwasser löst und derart Kohlensäure entsteht,
d) gasdichtes Verschließen des Flüssigkeitsbehälters,
e) Lagern des verschlossenen Flüssigkeitsbehälters, wobei durch eine Gleichgewichtseinstellung aus den Partikeln aus Dolomit und dem Kohlenstoffdioxid im Wasser gelöste Kalziumionen, Magnesiumionen und Hydrogenkarbonationen gebildet werden, wobei Schritt e) der letzte Schritt ist.

## Beschreibung

Die Erfindung betrifft ein Verfahren zur Herstellung von Sodawasser und einen Flüssigkeitsbehälter zur Herstellung von Sodawasser.

Ein Verfahren zur Herstellung von Sodawasser ist beispielsweise aus der EP 1 132 011 A2 bekannt. Bei diesem Verfahren wird Trink- oder Leitungswasser mit einem Mineralstoffe enthaltenden Zusatz versetzt. Der Zusatz enthält als Hauptkomponenten vorzugsweise mindestens ein Element aus der Gruppe Kalzium, Magnesium und Kalium, wobei diese Elemente insbesondere als Karbonat oder- Hydrogenkarbonat vorliegen. Ebenfalls enthält der Zusatz insbesondere mindestens ein Mineral aus der Gruppe Calcit und/oder Aragonit (Kalziumkarbonat), Epsomit (Magnesiumsulfat-Heptahydrat) und/oder Kalcinit (Kaliumbikarbonat). Als Nebenkomponenten können als feste Mineralzusätze Natrium, Lithium, Strontium, Chrom, Eisen, und Mangen, insbesondere in Form von Sulfaten oder Chloriden zugegeben werden. Ferner soll der pH-Wert des Wassers vor Zugabe des mineralstoffhaltigen Zusatzes mittels Kohlenstoffdioxid auf höchstens 5,5 gesenkt werden. Durch den Zusatz der Hauptkomponenten in Form von Karbonaten wird die temporäre Härte (Karbonathärte) des Wassers erhöht. Der Zusatz der erwähnten Mineralien und Nebenkomponenten erhöht zusätzlich auch die permanente Härte des Wassers.

Aus der DE 10 2006 058 223 A1 ist ein Verfahren zur Anreicherung von Wasser mit Magnesiumionen bekannt. Über einen Ionentauscher werden Magnesiumionen gegen Kalziumionen oder Schwermetallionen ausgetauscht. Da der Gehalt an Schwermetallen im Wasser vernachlässigbar gering ist, erhöht sich die temporäre Härte bei diesem Verfahren nicht. Es wird lediglich der Härtebildner Kalzium gegen den Härtebildner Magnesium ausgetauscht.

Handelsübliches Sodawasser, welches mit Kohlenstoffdioxid angereichertes Trinkwasser ist, weist im Gegensatz zu Mineralwasser einen geringen Gehalt an Mineralstoffen auf. Bekannter Weise können von Mineralstoffen stammende Erdalkalimetallionen, insbesondere Kalzium- und Magnesiumionen, in entsprechender Dosierung einen positiven Einfluss auf den menschlichen Organismus haben. Ein Mangel an Kalzium und Magnesium kann die Gesundheit erheblich beeinträchtigen. Es werden daher auch diverse Kalzium- und Magnesiumpräparate als Nahrungsergänzungsmittel angeboten.

Mineralwasser bezeichnet nach der deutschen Mineral- und Tafelwasserverordnung bzw. der österreichischen Mineralwasser- und Quellwasserverordnung ein Grundwasser mit bestimmten Inhaltsstoffen. Es muss aus unterirdischen Wasservorkommen stammen und von ursprünglicher Reinheit sein. Mineralwasser wird dabei direkt am Gewinnungsort (Quelle/Brunnen) abgefüllt und benötigt eine amtliche Anerkennung.

Erfreulicher Weise enthält Mineralwasser meistens einen hohen Gehalt an Kalzium- und/oder Magnesiumionen. Mineralwasser enthält jedoch auch häufig einen hohen Gehalt an Alkalimetallionen, insbesondere Natriumionen, welche zu einer Erhöhung des Blutdruckes beitragen und das Entstehen von Gefäßkrankheiten fördern können. Da Natriumionen nicht nur über Trink- und Mineralwasser, sondern auch in Form von Speisesalz mit fester Nahrung aufgenommen werden, kann die tägliche Aufnahme an Natriumionen die von Ernährungswissenschaftlern empfohlene Menge leicht übersteigen. Die Deutsche Gesellschaft für Ernährung empfiehlt gesunden Erwachsenen, nicht mehr als 1,5 g Natriumionen pro Tag zu sich zu nehmen. Für Kinder und Jugendliche ist die empfohlene maximale Tagesdosis niedriger. Mineralwässer mit einem Natriumionengehalt unter 20mg/l gelten als für eine natriumarme Ernährung geeignet, wobei Mineralwässer mit einem Natriumionengehalt von bis zu 200mg/l als "natriumarm" gelten bzw. als solche bezeichnet werden. Nur in wenigen Regionen kommen Mineralwässer vor, welche einerseits hohe Gehalte an Kalzium- und Magnesiumionen und gleichzeitig einen geringen Gehalt an Natriumionen aufweisen. Zudem ist ein hoher Gehalt an Kalziumionen häufig auf im Mineralwasser gelöstes Kalziumsulfat (Gips), ein hoher Gehalt an Magnesiumionen auf Magnesiumsulfat (Bittersalz) und eine hoher Gehalt an Natriumionen auf Natriumsulfat (Glaubersalz) zurückzuführen. Die den Ionen zugrundeliegenden Mineralien bzw. Salze zeigen - in entsprechenden Mengen - eine gesundheitsbeeinträchtige, insbesondere abführende, Wirkung und sollten daher nicht in größeren Mengen und/oder fortlaufend konsumiert werden.

Der Erfindung liegt daher die Aufgabe zugrunde, ein Verfahren zur Verfügung zu stellen, mittels welchem auf einfache Weise ein für den dauerhaften Konsum geeignetes sowie Kalzium- und Magnesiumionen enthaltendes Sodawasser bereitgestellt werden kann. Ferner soll ein zur Herstellung des Sodawassers besonders geeigneter Flüssigkeitsbehälter zur Verfügung gestellt werden.

Das erfindungsgemäße Verfahren weist folgende folgenden Schritte auf:
a) Einbringen von Partikeln aus Dolomit in einen Flüssigkeitsbehälter,
b) Einfüllen von Trinkwasser in den Flüssigkeitsbehälter,
c) Einpressen von Kohlenstoffdioxid in das Trinkwasser, wobei sich das Kohlenstoffdioxid über eine Gleichgewichtsreaktion im Trinkwasser löst und derart Kohlensäure entsteht,
d) gasdichtes Verschließen des Flüssigkeitsbehälters,
e) Lagern des verschlossenen Flüssigkeitsbehälters, wobei durch eine Gleichgewichtseinstellung aus den Partikeln aus Dolomit und dem Kohlenstoffdioxid im Wasser gelöste Kalziumionen, Magnesiumionen und Hydrogenkarbonationen gebildet werden,
   wobei Schritt e) der letzte Schritt ist.

Das Sodawasser gemäß der Erfindung wird daher ausschließlich mit natürlichen Zusätzen hergestellt. Es ist daher im Wesentlichen frei von Säureanionen, wie beispielsweise Chloriden oder Sulfaten. Diese sind höchstens in geringen Mengen enthalten, welche aus dem in Schritt b) verwendeten Trinkwasser stammen. Durch diese Bedingungen entspricht die in Schritt e) ablaufende Bildung der gelösten Kalziumionen, Magnesiumionen und Hydrogenkarbonationen im Wesentlichen jenem Prozess, welcher in der Natur in Dolomitgestein in großen Tiefen unter erhöhtem Kohlenstoffdioxidpartialdruck abläuft. In der Natur wird aus den Karbonaten des Dolomitgesteins durch Säureeinwirkung und/oder durch Mikroorganismen Kohlenstoffdioxid freigesetzt, welches die Bildung der entsprechenden wasserlöslichen Hydrogenkarbonate aus den schwerlöslichen Karbonaten bewirkt, sodass derart Kalzium- und Magnesiumionen in Lösung gehen. Dieser Vorgang erfordert bis zur Gleichgewichteinstellung entsprechend Zeit. Auch beim erfindungsgemäßen Verfahren stellt sich erst während der Lagerung des Flüssigkeitsbehälters langsam ein entsprechendes Verhältnis zwischen den Hydrogenkarbonationen, den Erdalkalimetallionen und den Hydrogenkarbonaten ein, sodass das Wasser erst nach seiner Lagerung zur Gleichgewichtseinstellung einen optimalen Gehalt an Magnesium- und Kalziumionen aufweist. Vorteilhafter Weise ist das Sodawasser frei oder im Wesentlichen frei von Natriumionen sowie frei von zusätzlichen Säureanionen. Es wird daher ein hinsichtlich seines Ionengehaltes optimiertes Sodawasser mit einer gegenüber herkömmlichem Sodawasser erhöhten temporären Härte zur Verfügung gestellt.

Im Gegensatz zur eingangs erwähnten EP 1 132 011 A2 ist die Lagerung zur Gleichgewichtseinstellung ein Verfahrensschritt. Die zur Gleichgewichtseinstellung erforderliche Zeitspanne kann je nach Zusammensetzung des Trinkwassers mehrere Monate bis Jahre umfassen, da auf den Zusatz von Anionen zugunsten der Qualität des Endproduktes verzichtet wird. Mittels des erfindungsgemäßen Verfahrens hergestelltes Sodawasser zeichnet sich durch eine ausgesprochen hohe Qualität aus, da das Wasser - im Vergleich zu den bekannten Sodawässern - einen höheren Gehalt der zur temporären Härte beitragenden Ionen (gebildet aus den Hydrogencarbonaten) und einen geringeren Gehalt an Natrium- Ionen aufweist. Das mittels des Verfahrens der Erfindung hergestellte Sodawasser weist zudem kaum zur permanenten Härte beitragende Ionen (gebildet aus Sulfaten, Chloriden und Nitraten) auf.

Wird das erfindungsgemäß hergestellte Sodawasser mit organische Säuren enthaltenden Getränken, beispielsweise Fruchtsäften oder Wein, gemischt, bilden sich aus den organischen Säuren, im Fall von Wein aus der Weinsäure, bei Fruchtsäften aus den entsprechenden Fruchtsäuren, und den im Sodawasser enthaltenen Kalzium- und Magnesiumionen die entsprechenden Kalzium- und Magnesiumsalze. Die organischen Säuren werden daher zumindest Großteils in gut wasserlösliche organische Salze umgewandelt, welche im menschlichen Verdauungstrakt im Vergleich zu den erwähnten organischen Säuren besser resorbiert werden und daher besser verträglich sind. Mit dem Sodawasser können daher bekömmliche Getränke mit besonders mildem Geschmack bereitgestellt werden.

Der gemäß der Erfindung zur Herstellung von Sodawasser nach dem erfindungsgemäßen Verfahren besonders geeignete Flüssigkeitsbehälter ist dadurch gekennzeichnet, dass er an seiner Innenseite oder seines Verschlusses pro Liter Fassungsvolumen des Flüssigkeitsbehälters Partikel aus Dolomit in einer Gesamtmenge von zumindest 0,2 g angebracht sind.

Mittels eines derartigen Flüssigkeitsbehälters ist es auf besonders einfache Weise möglich, erfindungsgemäßes Sodawasser herzustellen. Ein separates Einbringen der Partikel entfällt, es braucht lediglich Trinkwasser eingefüllt zu werden und Kohlenstoffdioxid eingebracht zu werden. Die Partikel können auf unterschiedliche Weise angebracht sein. Der Flüssigkeitsbehälter eignet sich somit ideal zur Durchführung des erfindungsgemäßen Verfahrens, insbesondere in Abfüllwerken, durch lokale gewerbliche Anwender oder durch den Endverbraucher.

Im Hinblick auf das Verfahren ist es von Vorteil, wenn in Schritt a) pro Liter Trinkwasser in den Flüssigkeitsbehälter die Partikel aus in einer Gesamtmenge von zumindest 0,2 g eingebracht werden. Ein derart hergestelltes Sodawasser weist nach der in Schritt d) erfolgten Gleichgewichtseistellung einen für die durchschnittliche konsumierte Menge an Sodawasser optimalen Gehalt an im Wasser gelösten Kalziumionen, Magnesiumionen und Hydrogenkarbonationen auf.

Bevorzugter Weise werden in Schritt a) Partikel mit einem Siebdurchmesser von 0,05 mm bis 2,0 mm, insbesondere von höchstens 0,5 mm, eingebracht. Derart feine Partikel stellen eine sehr große Oberfläche zur Verfügung, was die Gleichgewichtseinstellung in Schritt e) begünstigt.

Gemäß einer bevorzugten Verfahrensvariante ist vorgesehen, dass in Schritt a) die Partikel aus Dolomit lose in den Flüssigkeitsbehälter eingebracht werden. Ein loses Einbringen ist auf besonders rationelle und einfache Weise realisierbar.

Gemäß einer alternativen bevorzugten Verfahrensvariante werden bzw. wird in Schritt a) die Partikel aus Dolomit in einem wasserdurchlässigen Gebinde, beispielsweise einem Gewebesäckchen, eingebracht. Durch solche Gebinde werden unerwünschte Ablagerungen der Partikel an den Innenwänden der Gebinde verhindert, sodass die in Schritt e) erwähnte Gleichgewichtseinstellung schneller erreicht wird. Der Einsatz solcher Gebinde ist auch insofern vorteilhaft, da die Partikel bereits in einer geeigneten Menge vorportiert sind, wodurch das Verfahren sehr anwenderfreundlich ist.

Im Hinblick auf die Gleichgewichtseinstellung ist es von Vorteil, wenn in Schritt e) der Flüssigkeitsbehälter mindestens zwei Monate gelagert wird. Bei einer solchen Lagerdauer kann bereits von einer nennenswerten Erhöhung der temporären Härte ausgegangen werden.

Es ist ferner bevorzugt, wenn in Schritt e) der Flüssigkeitsbehälter bei einer Temperatur von höchstens 10°C gelagert wird.

Bevorzugter Weise werden in Schritt a) Partikel aus Dolomit eingefüllt, die vom natürlichen Mineral Dolomit stammen.

Ebenfalls ist es bevorzugt, wenn in Schritt a) Partikel aus Dolomit eingefüllt werden, die vom natürlichen Gestein Dolomit stammen.

Da bei langer Lagerung die Menge an Kohlensäure im Flüssigkeitsbehälter abnimmt, einerseits durch die Umsetzung mit den Karbonaten, andererseits auch durch etwaige Undichtheiten des Verschlusses des Flüssigkeitsbehälters, ist es bevorzugt, wenn während Schritt e) der Schritt c) zumindest ein weiteres Mal, insbesondere mehrerer weitere Male, durchgeführt wird. Während der Lagerung wird daher bevorzugt zumindest ein weiteres Mal Kohlenstoffdioxid in den Flüssigkeitsbehälter eingepresst.

Beim Flüssigkeitsbehälter gemäß der Erfindung ist vorzugsweise vorgesehen, dass an der Innenseite seines Verschlusses ein wasserdurchlässiges Gebinde, beispielsweise ein Gewebesäckchen, welches die Partikeln aus Dolomit enthält, angebracht ist. Wie bereits im Zusammenhang mit dem Verfahren erwähnt ist, sind solche Flüssigkeitsbehälter sehr anwenderfreundlich und können unmittelbar dafür verwendet werden, das erfindungsgemäße Verfahren durchzuführen.

Gemäß einer alternativen bevorzugten Variante haften die Partikel aus auf zumindest einer auf der Innenseite des Flüssigkeitsbehälters aufgebrachten Kleberschicht. Bei dieser Variante ist es ferner vorteilhaft, wenn die Kleberschicht aus einem Silikonelastomer, einem Acrylkleber, einem Epoxidkleber oder einem Zement, beispielsweise einem Phosphatzement, ist. Phosphatzement hat sich beispielsweise auch schon in der Zahnmedizin bestens bewährt.

Bevorzugt ist ferner eine Variante, bei welcher an der Innenseite des Flüssigkeitsbehälters eine Schicht aus Partikeln aus Dolomit angelagert ist. Bei dieser Variante sind vorteilhafter Weise keine weiteren Hilfsmittel oder Zusatzstoffe erforderlich. Der Flüssigkeitsbehälter ist unmittelbar zur Durchführung des erfindungsgemäßen Verfahrens verwendbar.

Gemäß einer weiteren bevorzugten Ausführungsvariante ist die an der Innenseite angelagerte Schicht aus den Partikeln aus Dolomit aus einer wässrigen Suspension mit Partikeln aus Dolomit hergestellt.

Bevorzugter Weise weisen die Partikel aus Dolomit einen Siebdurchmesser von 0,05 mm bis 2,0 mm, insbesondere von höchstens 0,5 mm, auf.

Bevorzugter Weise stammen die Partikel aus Dolomit im Flüssigkeitsbehälter von dem natürlichen Mineral Dolomit oder von dem natürlichen Gestein Dolomit.

Weitere Merkmale, Vorteile und Einzelheiten der Erfindung werden nun anhand der nachfolgenden Beschreibung genauer erläutert.

Im Rahmen der gegenständlichen Erfindung wird unter "Trinkwasser" "Wasser für den menschlichen Gebrauch" gemäß der Richtlinie 98/83/EG vom 3. November 1998 über die Qualität von Wasser für den menschlichen Gebrauch verstanden.

Gemäß Artikel 2, 1. a) dieser Richtlinie ist "Wasser für den menschlichen Gebrauch" definiert als:
"alles Wasser, sei es im ursprünglichen Zustand oder nach Aufbereitung, das zum Trinken, zum Kochen, zur Zubereitung von Speisen oder zu anderen häuslichen Zwecken bestimmt ist, und zwar ungeachtet seiner Herkunft und ungeachtet dessen, ob es aus einem Verteilungsnetz, in Tankfahrzeugen, in Flaschen oder anderen Behältern bereitgestellt wird."

Gemäß Artikel 3 (1) a) findet diese Richtlinie keine Anwendung auf natürliche Mineralwässer, die von den zuständigen einzelstaatlichen Behörden nach der Richtlinie 80/777/EWG des Rates vom 15. Juli 1980 zur Angleichung der Rechtsvorschriften der Mitgliedstaaten über die Gewinnung von und den Handel mit natürlichen Mineralwässern als solche anerkannt werden.

Gemäß einer ersten Verfahrensvariante der Erfindung werden in einen leeren gasdicht verschließbaren Flüssigkeitsbehälter, beispielsweise in eine handelsübliche Flasche aus Glas, lose Dolomitpartikel (CaMg(CO₃)₂) und nachfolgend Trinkwasser, insbesondere Quell- oder Leitungswasser mit Trinkwasserqualität eingefüllt. Anschließend wird in den Flüssigkeitsbehälter in an sich bekannter Weise Kohlenstoffdioxid eingepresst, welches gut wasserlöslich ist und in gelöster Form im Gleichgewicht mit Kohlensäure steht, sodass aus dem Trinkwasser Sodawasser entsteht. Der Flüssigkeitsbehälter wird verschlossen und über einen Zeitraum von vorzugsweise mindestens zwei Monaten gelagert. Insbesondere kann der Flüssigkeitsbehälter auch mehrere Jahre, vorzugsweise bis zu zwei Jahre, gelagert werden.

Die Dolomitpartikel werden von der Kohlensäure zumindest teilweise gelöst, wodurch Kaliziumhydrogenkarbonat (Ca(HCO₃)₂) und Magensiumhydrogenkarbonat (Mg(HCO₃)₂) gebildet werden. Im Gegensatz zu den ursprünglichen Dolomitpartikel sind Kaliziumhydrogenkarbonat und Magensiumhydrogenkarbonat gut wasserlöslich, sodass sie sich im Sodawasser lösen und in diesem Kalziumionen (Ca²⁺) und Hydrogenkarbonationen (HCO₃⁻) bzw. Magnesiumionen (Mg²⁺) und Hydrogenkarbonationen (HCO₃⁻) bilden. Über das Dissoziationsgleichgewicht der Kohlensäure (H₂CO₃ ⇄ H⁺ + HCO₃⁻) stehen die Hydrogenkarbonate ferner im Gleichgewicht mit den entsprechenden Karbonaten (MgCO₃ + H₂CO₃ ⇄ Mg(HCO₃)₂ bzw. CaCO₃ + H₂CO₃ ⇄ Ca(HCO₃)₂).

Während der Lagerung des Flüssigkeitsbehälters stellt sich ein entsprechendes Verhältnis zwischen den Hydrogenkarbonationen, den Kalziumionen, den Magnesiumionen und den Hydrogenkarbonaten ein. Die Einstellung des Gleichgewichts kann einen Zeitraum von Wochen, Monaten oder Jahren beanspruchen, wobei dieser Zeitraum insbesondere von den weiteren Wasserinhaltstoffen, der Kohlenstoffdioxidkonzentration und den Lagerungsbedingungen, z.B. der Temperatur, abhängt. Das Wasser verbessert daher bei seiner Lagerung bis zur Gleichgewichtseinstellung seine Eigenschaften.

Bei der Gleichgewichtseinstellung ist das Wasser im verschlossenen Flüssigkeitsbehälter mit Hydrogenkarbonat-, Kalzium- und Magnesiumionen gesättigt. Erst beim Öffnen des Flüssigkeitsbehälters entweicht aus diesem langsam Kohlenstoffdioxid, welcher derart dem Gleichgewicht entzogen wird, sodass eine übersättigte Lösung entsteht, die direkt als bekömmliches und gesundheitsförderndes Getränk genossen werden kann.

Wird das erfindungsgemäße Sodawasser mit organische Säuren enthaltenden Getränken, beispielsweise Fruchtsäften oder Wein, gemischt, bilden sich aus diesen organischen Säuren, im Fall von Wein aus der Weinsäure, bei Fruchtsäften aus den entsprechenden Fruchtsäuren, und den im Sodawasser enthaltenen Kalzium- und Magnesiumionen die entsprechende Kalzium- und Magnesiumsalze. Die organischen Säuren werden derart zumindest Großteils in gut wasserlösliche organische Salze umgewandelt, welche im menschlichen Verdauungstrakt im Vergleich zu den erwähnten organischen Säuren besser resorbiert werden und daher besser verträglich sind. Mit dem Sodawasser können daher bekömmliche Getränke mit besonders mildem Geschmack bereitgestellt werden.

Gemäß einer zweiten Verfahrensvariante wird zuerst Trinkwasser in den Flüssigkeitsbehälter eingefüllt und anschließend werden unmittelbar die Dolomitpartikel hinzugefügt. Gemäß einer dritten Verfahrensvariante wird zuerst Trinkwasser in Flüssigkeitsbehälter eingefüllt, in diesen nachfolgend Kohlenstoffdioxid eingepresst und anschließend werden die Dolomitpartikel hinzugefügt.

Bei sämtlichen Ausführungsvarianten können die Dolomitpartikel entsprechend vorportioniert in einem wasserdurchlässigen Gebinde, etwa einem feinmaschigen Gewebesäckchen, eingebracht sein und das Gebinde in den Behälter eingebracht werden.

Ein zur Herstellung des Sodawassers geeigneter Flüssigkeitsbehälter besteht aus Glas, Ton, Keramik, Metall oder Kunststoff, insbesondere aus PET, und ist mit einem Deckel, insbesondere mittels eines Schraubverschlusses, gasdicht verschließbar. In den Trinkwasser enthaltenden Flüssigkeitsbehälter kann in an sich bekannter Weise Kohlenstoffdioxid eingebracht werden.

Bei einer ersten Ausführungsvariante des Flüssigkeitsbehälters ist an der Innenseite des Deckels ein feinmaschiges wasserdurchlässiges Gebinde, etwa einem Siebgewebe, befestigt, welches die Dolomitpartikel enthält. Gemäß einer zweiten Ausführungsvariante sind die Dolomitpartikel mittels eines lebensmittelechten Klebers, beispielsweise mit einem Silikonelastomer, einem Acrylkleber, einem Epoxidkleber oder mit Zement, beispielsweise einem Phosphatzement, an der Innenseite des Deckels oder der Innenseite des Flüssigkeitsbehälters fixiert.

Bei einer weiteren Ausführungsvariante enthält der Flüssigkeitsbehälter eine an seiner Innenseite angelagerte dünne Schicht aus Dolomitpartikeln. Zur Bildung einer solchen Schicht wird zuerst eine mit Kalzium- und Magnesiumhydrogenkarbonat enthaltende Lösung hergestellt, in welche Dolomitpartikel eingemischt werden. Durch Aufpressen von Kohlenstoffdioxid auf die Lösung, insbesondere mit einem Druck von 40 bar bis 70 bar, wird eine mit Kalzium- und Magnesiumhydrogenkarbonat übersättigte Lösung erhalten. Die derart erhalten Suspension wird in den Flüssigkeitsbehälter eingefüllt, insbesondere in Form von fein verteilten Tröpfchen in diesen eingesprüht. Nach Verdunsten des Wassers bleiben an der Innenseite des Flüssigkeitsbehälters abgelagerte Dolomitpartikel zurück. Diese stammen entweder unmittelbar aus der Suspension oder werden aus dem in dieser enthaltenen Kalzium- und Magnesiumhydrogenkarbonat gebildet. Der Vorgang wird solange wiederholt bis die Innenseite des Flüssigkeitsbehälters in erwünschter Weise und erwünschter Menge, vorzugsweise im Wesentlichen vollständig mit einer Dolomitschicht bedeckt ist. Die Wasserverdunstung wird vorzugsweise durch Wärmezufuhr beschleunigt, wobei sowohl der Flüssigkeitsbehälter als auch die Suspension vor dem Einbringen in den Flüssigkeitsbehälter erwärmt werden können. Zur besonders schnellen Bildung einer Schicht aus Dolomitpartikeln wird eine kochende, entsprechende Suspension in Form von fein verteilten Tröpfchen in den Flüssigkeitsbehälter eingesprüht.

Es ist ferner möglich, den Flüssigkeitsbehälter lokal begrenzt zu erwärmen, sodass sich an diesen lokal erwärmten Stellen die Dolomitpartikel räumlich begrenzt an der Innenseite des Flüssigkeitsbehälters ablagern. Bei durchsichtigen Flüssigkeitsbehältern können derart Gestaltungseffekte erzielt werden.

Bei sämtlichen erfindungsgemäßen Verfahrensvarianten sind Dolomitpartikel in einer Menge von mindestens 0,2 g, insbesondere von höchstens 5,0 g, besonders bevorzugt von höchstens 2,0 g, pro Liter Trinkwasser vorgesehen. Bei sämtlichen erfindungsgemäßen Flüssigkeitsbehältern werden Dolomitpartikel in einer Menge von mindestens 0,2 g, insbesondere von höchstens 5,0 g, besonders bevorzugt von höchstens 2,0 g, pro Liter Fassungsvolumen des Flüssigkeitsbehälters in den Flüssigkeitsbehälter auf eine der beschriebenen Weisen eingebracht. Insbesondere werden die Partikel im Überschuss zugegeben, sodass nach der Gleichgewichtseinstellung ungelöste Partikel im Behälter verbleiben. Die Menge der während der Lagerung des Flüssigkeitsbehälters in Lösung gehenden Partikel ist von der Zusammensetzung des verwendeten Trinkwassers und der Menge an ein- bzw. aufgepresstem Kohlenstoffdioxid abhängig, wobei insbesondere 0,2 g bis 0,5 g Partikel pro Liter Trinkwasser in Lösung gehen.

Die Dolomitpartikel stammen entweder von dem natürlichen Mineral Dolomit (CaMg(CO₃)₂) oder von dem natürlichen Gestein Dolomit (CaMg(CO₃)₂, (CaCO₃·MgCO₃), welches zumindest zu 90% aus dem Mineral Dolomit besteht. Die Dolomitpartikel werden insbesondere sauber, daher gewaschen, verwendet. Gemäß einer alternativen Ausführungsvariante wird anstelle von Dolomitpartikel eine Partikelmischung verwendet, welches ausschließlich aus Kalziumkarbonaten und Magnesiumkarbonaten besteht. Ferner kann auch ein Gemisch aus Dolomitpartikeln und dieser Partikelmischung verwendet werden.

Bevorzugter Weise weisen die jeweils eingesetzten Partikel einen Siebdurchmesser von 0,05 mm bis 2,0 mm, insbesondere von höchstens 0,5 mm, auf. Gegebenenfalls werden die jeweils eingesetzten Partikel auf einen derartigen Durchmesser zerkleinert. Bevorzugter Weise wird daher Dolomitstaub, Dolomitsand, Dolomitsplitt oder ein Gemisch aus diesen verwendet.

Da bei langer Lagerung die Menge an Kohlensäure im Flüssigkeitsbehälter abnimmt, einerseits durch die beschriebene Umsetzung mit den aus dem Dolomitgestein stammenden Karbonaten bzw. mit den zugesetzten Kalziumkarbonaten und Magnesiumkarbonaten, andererseits auch durch etwaige Undichtheiten des Flüssigkeitsbehälters, ist es bevorzugt, wenn wiederholt Kohlenstoffdioxid nach einer bestimmten Lagerzeit in den Flüssigkeitsbehälter eingepresst wird.

## Patentansprüche

1. Verfahren zur Herstellung von Sodawasser mit folgenden Schritten:
a) Einbringen von Partikeln aus Dolomit in einen Flüssigkeitsbehälter,
b) Einfüllen von Trinkwasser in den Flüssigkeitsbehälter,
c) Einpressen von Kohlenstoffdioxid in das Trinkwasser, wobei sich das Kohlenstoffdioxid über eine Gleichgewichtsreaktion im Trinkwasser löst und derart Kohlensäure entsteht,
d) gasdichtes Verschließen des Flüssigkeitsbehälters,
e) Lagern des verschlossenen Flüssigkeitsbehälters, wobei durch eine Gleichgewichtseinstellung aus den Partikeln aus Dolomit und dem Kohlenstoffdioxid im Wasser gelöste Kalziumionen, Magnesiumionen und Hydrogenkarbonationen gebildet werden,
wobei Schritt e) der letzte Schritt ist.

2. Verfahren nach Anspruch 1, **dadurch gekennzeichnet, dass** in Schritt a) pro Liter Trinkwasser in den Flüssigkeitsbehälter die Partikel aus Dolomit in einer Gesamtmenge von zumindest 0,2 g eingebracht werden.

3. Verfahren nach Anspruch 1 oder 2, **dadurch gekennzeichnet, dass** in Schritt a) Partikel mit einem Siebdurchmesser von 0,05 mm bis 2,0 mm, insbesondere von höchstens 0,5 mm, eingebracht werden.

4. Verfahren nach einem der Ansprüche 1 bis 3, **dadurch gekennzeichnet, dass** in Schritt a) die Partikel aus Dolomit lose in den Flüssigkeitsbehälter eingebracht werden.

5. Verfahren nach einem der Ansprüche 1 bis 3, **dadurch gekennzeichnet, dass** in Schritt a) die Partikel aus Dolomit in einem wasserdurchlässigen Gebinde, beispielsweise einem Gewebesäckchen, eingebracht werden.

6. Verfahren nach einem der Ansprüche 1 bis 5, **dadurch gekennzeichnet, dass** in Schritt e) der Flüssigkeitsbehälter mindestens zwei Monate gelagert wird.

7. Verfahren nach einem der Ansprüche 1 bis 6, **dadurch gekennzeichnet, dass** in Schritt e) der Flüssigkeitsbehälter bei einer Temperatur von höchstens 10°C gelagert wird.

8. Verfahren nach einem der Ansprüche 1 bis 7, **dadurch gekennzeichnet, dass** in Schritt a) Partikel aus Dolomit eingefüllt werden, die vom natürlichen Mineral oder vom natürlichen Gestein Dolomit stammen.

9. Verfahren nach einem der Ansprüche 1 bis 8, **dadurch gekennzeichnet, dass** während Schritt e) der Schritt c) zumindest ein weiteres Mal, insbesondere mehrerer weitere Male, durchgeführt wird.

10. Flüssigkeitsbehälter, welcher mit einem Verschluss verschließbar ist, zur Herstellung von Sodawasser nach dem Verfahren gemäß einem oder mehreren der Ansprüche 1 bis 9,
dadurch geknnzeichnet,
dass an der Innenseite des Flüssigkeitsbehälters oder des Verschlusses pro Liter Fassungsvolumen des Flüssigkeitsbehälters Partikel aus Dolomit in einer Gesamtmenge von zumindest 0,2 g angebracht sind bzw. ist.

11. Flüssigkeitsbehälter nach Anspruch 10, **dadurch gekennzeichnet, dass** an der Innenseite des Verschlusses ein wasserdurchlässiges Gebinde, beispielsweise ein Gewebesäckchen, welches die Partikeln aus Dolomit enthält, angebracht ist.

12. Flüssigkeitsbehälter nach Anspruch 10, **dadurch gekennzeichnet, dass** die Partikeln aus Dolomit auf zumindest einer auf der Innenseite des Flüssigkeitsbehälters aufgebrachten Kleberschicht, beispielsweise aus einem Silikonelastomer, einem Acrylkleber, einem Epoxidkleber oder einem Zement, beispielsweise einem Phosphatzement, anhaften.

13. Flüssigkeitsbehälter nach Anspruch 10, **dadurch gekennzeichnet, dass** an der Innenseite des Flüssigkeitsbehälters eine Schicht aus Partikeln aus Dolomit angelagert ist, welche insbesondere aus einer wässrigen Suspension mit Partikeln aus Dolomit hergestellt ist.

14. Flüssigkeitsbehälter nach einem der Ansprüche 10 bis 13, **dadurch gekennzeichnet, dass** die Partikel aus Dolomit einen Siebdurchmesser von 0,05 mm bis 2,0 mm, insbesondere von höchstens 0,5 mm, aufweisen.

15. Flüssigkeitsbehälter nach einem der Ansprüche 10 bis 14, **dadurch gekennzeichnet, dass** die Partikel aus Dolomit von dem natürlichen Mineral oder dem natürlichen Gestein Dolomit stammen.
